# EUROPEAN PATENT APPLICATION

(11) **EP 4 769 178 A1**
(43) Date of publication of application: **01.07.2026**
(21) Application number: 24906361.1
(22) Date of filing: 17.12.2024
(51) Int. Cl.: G06F 16/44

(54) **ANIMATION DISPLAY METHOD AND APPARATUS FOR VEHICLE LAMP PANEL, AND VEHICLE AND STORAGE MEDIUM**

(30) Priority: 18.12.2023 CN 202311748652
(71) Applicant: Zhejiang Zeekr Intelligent Technology Co., Ltd., Ningbo, Zhejiang 315899 (CN); Zhejiang Geely Holding Group Co., Ltd., Hangzhou, Zhejiang 310051 (CN)
(72) Inventor: CHEN, Chaojun, Ningbo, Zhejiang 315899 (CN); CHEN, Chen, Ningbo, Zhejiang 315899 (CN); ZHANG, Zhibin, Ningbo, Zhejiang 315899 (CN); ZHANG, Xijie, Ningbo, Zhejiang 315899 (CN); QIN, Yu, Ningbo, Zhejiang 315899 (CN)
(74) Representative: Elzaburu S.L.P.
(86) International application number: PCT/CN2024/140038
(87) International publication number: WO 2025/130882

(57) **Abstract**

The present application provides a method and an apparatus for displaying an animation on a vehicle lamp panel, a vehicle and a storage medium. The method includes: receiving a plurality of image frames of an animation to be displayed; performing frame synchronization verification on each of the image frames, and putting the image frame into a cache pool after the verification passes; and sequentially obtaining the plurality of image frames from the cache pool and displaying the plurality of image frames on the lamp panel in response to that a playback event is triggered.

## Description

This application claims priority to Chinese Patent Application No. 202311748652.9, filed on December 18, 2023, the entire contents of which are incorporated herein by reference.

### TECHNICAL FIELD

The present application relates to, but is not limited to, the technical field of vehicles, and in particular relates to a method and an apparatus for displaying an animation on a vehicle lamp panel, a vehicle and a storage medium.

### BACKGROUND

With the vigorous development of the automotive industry, the design of vehicle lamp panels has become increasingly intelligent, for example, the animation can be displayed on vehicle lamp panels.

In the related art, the animation to be displayed is transmitted frame by frame to the vehicle lamp panel. However, when the data volume of the image frames of the animation to be displayed is large, the frame-by-frame transmission of the image frame data to the vehicle lamp panel is prone to frame errors and stuttering issues, resulting in unsmooth animation display.

### SUMMARY

The following is a summary of the subject matter described in detail herein. This summary is not intended to limit the scope of the claims.

The present application provides a method and an apparatus for displaying an animation on a vehicle lamp panel, a vehicle and a storage medium, aiming to improve the animation display effect of the vehicle lamp panel.

To achieve the above objective, the present application provides a method for displaying an animation on a vehicle lamp panel, including:
receiving a plurality of image frames of an animation to be displayed;
performing frame synchronization verification on each of the image frames, and putting the image frame into a cache pool after the verification passes; and
sequentially obtaining the plurality of image frames from the cache pool and displaying the plurality of image frames on the lamp panel in response to that a playback event is triggered.

In an embodiment, the image frame includes a first position image frame or a second position image frame;
the performing frame synchronization verification on each of the image frames and putting the image frame into the cache pool after the verification passes includes:
in response to that the image frame includes the first position image frame, performing frame synchronization verification on the first position image frame, and after the verification passes, constructing the second position image frame of a corresponding frame sequence number based on the first position image frame and the frame sequence number of the first position image frame, and putting the first position image frame and the second position image frame corresponding to the frame sequence number into the cache pool; or
in response to that the image frame includes the second position image frame, performing frame synchronization verification on the second position image frame, and after the verification passes, constructing the first position image frame of a corresponding frame sequence number based on the second position image frame and the frame sequence number of the second position image frame, and putting the first position image frame and the second position image frame corresponding to the frame sequence number into the cache pool.

In an embodiment, the image frames include a first position image frame and a second position image frame;
the performing frame synchronization verification on each of the image frames and putting the image frame into the cache pool after the verification passes includes:
in response to that the image frames include the first position image frame and the second position image frame, performing frame synchronization verification on the first position image frame and the second position image frame, and putting the first position image frame and the second position image frame into the cache pool after the first position image frame and the second position image frame pass the verification.

In an embodiment, the first position image frame includes a verification value of first position image frame and a complete image verification value; the second position image frame includes a verification value of second position image frame and the complete image verification value; the verification value of first position image frame is calculated based on pixel information of the first position image frame; the verification value of second position image frame is calculated based on pixel information of the second position image frame; the complete image verification value is calculated based on the pixel information of the first position image frame and the pixel information of the second position image frame;
the performing frame synchronization verification on the first position image frame and the second position image frame includes:
performing frame synchronization verification on the first position image frame based on the verification value of first position image frame and the complete image verification value; and
performing frame synchronization verification on the second position image frame based on the verification value of second position image frame and the complete image verification value.

In an embodiment, before the playback event is triggered, the method further includes:
in response to that a number of image frames cached in the cache pool reaches a preset number of cached frames, activating the playback event.

In an embodiment, the vehicle includes a cabin entertainment processing unit, and the receiving the plurality of image frames of the animation to be displayed includes:
receiving the plurality of image frames transmitted by the cabin entertainment processing unit based on a preset transmission channel.

In an embodiment, grayscale information of each pixel point in the image frame is represented in binary.

The present application further provides an apparatus for displaying an animation on a vehicle lamp panel, including:
a receiving module, configured to receive a plurality of image frames of an animation to be displayed;
a verification and caching module, configured to perform frame synchronization verification on each of the image frames, and put the image frame into a cache pool after the verification passes; and
a display module, configured to sequentially obtain the plurality of image frames from the cache pool and display the plurality of image frames on the lamp panel in response to that a playback event is triggered.

The present application further provides a terminal device, including a memory, a processor, and a program for displaying an animation on a vehicle lamp panel stored on the memory and executable on the processor, and when the program for displaying the animation on the vehicle lamp panel in the memory is executed by the processor, the method for displaying the animation on the vehicle lamp panel as described above is implemented.

The present application further provides a computer-readable storage medium, the computer-readable storage medium stores a program for displaying an animation on a vehicle lamp panel, and when the program for displaying the animation on the vehicle lamp panel is executed by a processor, the method for displaying the animation on the vehicle lamp panel as described above is implemented.

The present application provides a method and an apparatus for displaying an animation on a vehicle lamp panel, a vehicle and a storage medium, the method including: receiving a plurality of image frames of an animation to be displayed; performing frame synchronization verification on each of the image frames, and putting the image frame into a cache pool after the verification passes; and sequentially obtaining the plurality of image frames from the cache pool and displaying the plurality of image frames on the lamp panel in response to that a playback event is triggered. By performing frame synchronization verification on the received image frames, the present application avoids the animation display effect not meeting the user's actual needs due to image frame errors during image frame transmission. Meanwhile, by adopting the cache pool, during animation playback, the plurality of image frames are directly obtained from the cache pool for display without waiting for the completion of the transmission of the plurality of image frame data before displaying the plurality of image frame data, thereby reducing stuttering and improving the smoothness of the animation display on the vehicle lamp panel.

Other aspects can be understood after reading and understanding the accompanying drawings and detailed description.

### BRIEF DESCRIPTION OF THE DRAWINGS

FIG. 1 is a schematic diagram of functional modules of a vehicle light controller involved in a method for displaying an animation on a vehicle lamp panel according to an embodiment of the present application.
FIG. 2 is a schematic flowchart of the method for displaying the animation on the vehicle lamp panel according to a first embodiment of the present application.
FIG. 3 is a schematic flowchart of the method for displaying the animation on the vehicle lamp panel according to a second embodiment of the present application.
FIG. 4 is a schematic flowchart of the method for displaying the animation on the vehicle lamp panel according to a third embodiment of the present application.
FIG. 5 is a schematic flowchart of the method for displaying the animation on the vehicle lamp panel according to a fourth embodiment of the present application.

The realization, functional characteristics, and advantages of the objectives of the present application will be further described with reference to the accompanying drawings in conjunction with the embodiments.

### DETAILED DESCRIPTION OF THE EMBODIMENTS

It should be understood that the specific embodiments described herein are only used to explain the present application and are not intended to limit the present application.

The main solution of the embodiments of the present application is: receiving a plurality of image frames of an animation to be displayed, performing frame synchronization verification on each of the image frames, and putting the image frame into a cache pool after the verification passes; and sequentially obtaining the plurality of image frames from the cache pool and displaying the plurality of image frames on the lamp panel in response to that a playback event is triggered.

By performing frame synchronization verification on the received image frames, the present application avoids the animation display effect not meeting the user's actual needs due to image frame errors during image frame transmission. Meanwhile, by adopting the cache pool, during animation playback, the plurality of image frames are directly obtained from the cache pool for display without waiting for the completion of the transmission of the plurality of image frame data before displaying the plurality of image frame data, thereby reducing stuttering and improving the smoothness of the animation display on the vehicle lamp panel.

Technical terms involved in the present application are as follows.

Controller area network with flexible data-rate (CAN FD): CAN FD is an extension of the original CAN protocol specified in ISO11898-1, designed to meet the increasing demand for bandwidth in automotive networks.

In the related art, the animation to be displayed is transmitted frame by frame to the vehicle light controller. When the data volume contained in the image frames is relatively large, the transmission speed of the image frames will be relatively slow, and there may be cases where the transmission speed of the image frames cannot keep up with the animation refresh rate of the vehicle lamp panel. For example, in a scenario where the vehicle light includes a large number of lamp beads, since each lamp bead corresponds to one pixel of the image frame, the more lamp beads there are, the more pixels the image frame to be displayed on the lamp panel has, and the larger the data volume of each image frame. It is assumed that the data of each image frame reaches 0.025 Mbit, the transmission speed of the current transmission channel is 0.5 Mbit/s. The vehicle lamp panel refreshes the frame data every 40 ms, at this time, the transmission speed of the image frames cannot keep up with the animation refresh rate of the lamp panel, which will cause the animation display of the vehicle lamp panel to stutter. At the same time, the transmission of the plurality of image frame data may be interfered by the environment, resulting in deviations between the frame data transmitted to the vehicle lamp panel and the original frame data. In this case, the animation data displayed by the vehicle lamp panel may not meet the user's actual needs, and the display effect is poor.

Based on this, the embodiments of the present application provide a solution. By verifying the image frame data transmitted to the vehicle lamp panel, the probability of the lamp panel displaying image frame error can be reduced. By caching the image frames in the cache pool, during animation display, the plurality of image frames are directly obtained from the cache pool for display without waiting for the completion of the transmission of the plurality of image frame data before displaying the plurality of image frame data, which can reduce the probability of animation stuttering.

The method of the embodiment of the present application can be applied to a vehicle light controller of a vehicle. The vehicle is equipped with a lamp panel, and a plurality of lamp beads are integrated on the lamp panel. The vehicle light controller can control the turning on, turning off, or grayscale display of each lamp bead. The vehicle light controller can be physically connected to the cabin entertainment processing unit to realize data interaction. For example, the vehicle light controller can receive image frame data sent by the cabin entertainment processing unit and control the grayscale display of each lamp bead based on the grayscale information contained in the image frame data.

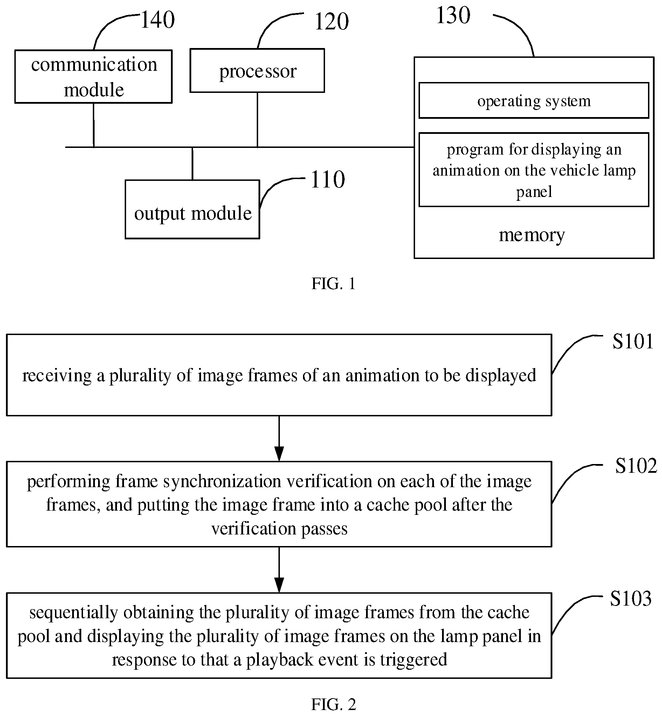

In an embodiment, as shown in FIG. 1, FIG. 1 is a schematic diagram of functional modules of a vehicle light controller involved in the method for displaying an animation on a vehicle lamp panel according to an embodiment of the present application. In the embodiment, the vehicle light controller at least includes an output module 110, a processor 120, a memory 130, and a communication module 140.

The memory 130 stores an operating system and a program for displaying an animation on the vehicle lamp panel. The vehicle light controller can store information such as the plurality of image frames of the received animation to be displayed in the memory 130; the output module 110 may be a display screen, a speaker, etc. The communication module 140 may include a WIFI module, a mobile communication module, a Bluetooth module, etc., and communicates with external devices (such as a mobile terminal APP) or a server through the communication module 140.

When the program for displaying the animation on the vehicle lamp panel in the memory 130 is executed by the processor, the following steps are implemented:
receiving a plurality of image frames of an animation to be displayed;
performing frame synchronization verification on each of the image frames, and putting the image frame into a cache pool after the verification passes; and
sequentially obtaining the plurality of image frames from the cache pool and displaying the plurality of image frames on the lamp panel in response to that a playback event is triggered.

In an embodiment, when the program for displaying the animation on the vehicle lamp panel in the memory 130 is executed by the processor, the following steps are further implemented:
in response to that the image frame includes a first position image frame, performing frame synchronization verification on the first position image frame, and after the verification passes, constructing a second position image frame of a corresponding frame sequence number based on the first position image frame and the frame sequence number of the first position image frame, and putting the first position image frame and the second position image frame corresponding to the frame sequence number into the cache pool.

In an embodiment, when the program for displaying the animation on the vehicle lamp panel in the memory 130 is executed by the processor, the following steps are further implemented:
in response to that the image frame includes a second position image frame, performing frame synchronization verification on the second position image frame, and after the verification passes, constructing a first position image frame of a corresponding frame sequence number based on the second position image frame and the frame sequence number of the second position image frame, and putting the first position image frame and the second position image frame corresponding to the frame sequence number into the cache pool.

In an embodiment, when the program for displaying the animation on the vehicle lamp panel in the memory 130 is executed by the processor, the following steps are further implemented:
in response to that the image frames include a first position image frame and a second position image frame, performing frame synchronization verification on the first position image frame and the second position image frame, and putting the first position image frame and the second position image frame into the cache pool after the first position image frame and the second position image frame pass the verification.

In an embodiment, when the program for displaying the animation on the vehicle lamp panel in the memory 130 is executed by the processor, the following steps are further implemented:
performing frame synchronization verification on the first position image frame based on the verification value of first position image frame and the complete image verification value; and
performing frame synchronization verification on the second position image frame based on the verification value of second position image frame and the complete image verification value.

In an embodiment, when the program for displaying the animation on the vehicle lamp panel in the memory 130 is executed by the processor, the following steps are further implemented:
in response to that a number of image frames cached in the cache pool reaches a preset number of cached frames, activating the playback event.

In an embodiment, when the program for displaying the animation on the vehicle lamp panel in the memory 130 is executed by the processor, the following steps are further implemented:
receiving the plurality of image frames transmitted by the cabin entertainment processing unit based on a preset transmission channel.

In the embodiment, through the above solution, by receiving a plurality of image frames of an animation to be displayed; performing frame synchronization verification on each of the image frames, and putting the image frame into a cache pool after the verification passes; and sequentially obtaining the plurality of image frames from the cache pool and displaying the plurality of image frames on the lamp panel in response to that a playback event is triggered. By performing frame synchronization verification on the received image frames, the present application avoids the animation display effect not meeting the user's actual needs due to image frame errors during image frame transmission. Meanwhile, by adopting the cache pool, during animation playback, the plurality of image frames are directly obtained from the cache pool for display without waiting for the completion of the transmission of the plurality of image frame data before displaying the plurality of image frame data, thereby reducing stuttering and improving the smoothness of the animation display on the vehicle lamp panel.

Based on the above terminal device architecture but not limited to the above architecture, the method embodiments of the present application are provided. The method embodiments of the present application are applied to a vehicle light controller, which can communicate with a cabin entertainment processing unit.

As shown in FIG. 2, FIG. 2 is a schematic flowchart of a first embodiment of the method for displaying an animation on a vehicle lamp panel according to the present application. The method for displaying an animation on a vehicle lamp panel in the embodiment includes:
Step S101, receiving a plurality of image frames of an animation to be displayed.

The above-mentioned plurality of image frames may be a plurality of image frame data sequentially transmitted by the cabin entertainment processing unit according to the frame sequence number of the animation to be displayed. The above-mentioned animation to be displayed may be an animation selected by the user from an animation resource library by touching the central control screen, or an animation formed by the user customizing and drawing a plurality of images through an animation production program on the central control screen and setting the playback order of the plurality of images.

In an embodiment, the above-mentioned image frame may include complete image data to be displayed on the lamp panel. For example, when the lamp panel includes a left lamp panel and a right lamp panel, it may include image frame data to be displayed on the left lamp panel and image frame data to be displayed on the right lamp panel.

In an embodiment, the above-mentioned image frame may include image data to be displayed at one of the positions on the lamp panel. For example, when the lamp panel includes a left lamp panel and a right lamp panel, and the i-th frame image to be displayed on the left lamp panel and the right lamp panel is a symmetric image (where i is a positive integer), the above-mentioned image frame may include left image frame data or right image frame data. By only transmitting the image data of either of the two positions with symmetric attributes, the calculation amount can be reduced.

In an embodiment, the cabin entertainment processing unit may receive an animation display trigger event of the animation to be displayed operated by the user through the central control screen of the cabin entertainment system, and obtain the animation to be displayed. Alternatively, the cabin entertainment processing unit may receive an animation display trigger event of the animation to be displayed triggered by the user through a mobile terminal APP, and obtain the animation to be displayed transmitted from the mobile terminal APP. After obtaining the animation to be displayed, the cabin entertainment processing unit frames the animation to be displayed into a plurality of image frames according to the frame sequence number, and sequentially transmits the plurality of image frames to the vehicle light controller according to the frame sequence number.

In an embodiment, the cabin entertainment processing unit may frame the animation to be displayed into a plurality of frame data to obtain each initial image frame, and perform one or more of the following processing procedures on each initial image frame data to obtain a plurality of image frames.

Grayscale processing: the cabin entertainment processing unit may perform grayscale processing on each initial image frame based on the number of lamp beads included in the lamp panel, so that the grayscale value of each pixel point included in the initial image frame is mapped to each lamp bead. To reduce the calculation amount, the grayscale value of each pixel point can be represented by a binary number (number of bits), so that when the number of lamp beads on the lamp panel is large, the calculation amount can be reduced.

Compression processing: the cabin entertainment processing unit may also obtain the maximum allowable power of the lamp panel, calculate the expected power of the initial image frame displayed on the lamp panel based on the grayscale information of each pixel point included in the initial image frame, and obtain the maximum allowable power of the lamp panel. If the expected power is greater than the maximum allowable power of the lamp panel, the initial image frame is compressed until the expected power is less than the maximum allowable power of the lamp panel, thereby ensuring the service life of the lamp panel.

Verification generation processing: the cabin entertainment processing unit may also calculate a synchronization frame verification value for each initial image frame, generate a verification value, and attach the verification value to the initial image frame.

Correspondingly, each pixel point in the above-mentioned image frame may include corresponding grayscale information, and the grayscale information corresponding to each pixel point is represented in binary. Binary, i.e., bit, is the smallest unit of information. By using bits to represent the grayscale information corresponding to each pixel point, the calculation amount can be reduced in scenarios with a large number of lamp beads. Meanwhile, the above-mentioned image frame may also include a verification value, and the lamp panel controller may perform frame synchronization verification on the image frame based on the verification value.

Step S102, performing frame synchronization verification on each of the image frames, and putting the image frame into a cache pool after the verification passes.

The cache pool in the embodiment can be a cache queue, including a storage space with a preset storage size.

In an embodiment, in the solution of the embodiment, frame synchronization verification is performed on each received image frame. The purpose of frame synchronization verification is to verify whether the image frame data transmitted to the lamp panel controller deviates from the original image frame data during transmission. Through the verification, it is ensured that the image frame data displayed on the vehicle lamp panel is the original animation data, thereby meeting the user's actual display needs.

In the solution of the embodiment, a cyclic redundancy check (CRC) algorithm can be used for frame synchronization verification. If the verification result passes, it is determined that the image frame data has no transmission error, and the image frame data is put into the cache pool. If the verification result fails, it is determined that the image frame data has a transmission error, the image frame data is discarded, and a retransmission request is initiated to the cabin entertainment processing unit until the received image frame of the corresponding frame sequence number passes the frame synchronization verification. The retransmission request may include the frame sequence number and error type of the image frame, so that the cabin entertainment processing unit retransmits the corresponding image frame to the vehicle light controller based on the corresponding frame sequence number.

After the vehicle light controller successfully receives each image frame data and the image frame data is put into the cache pool after passing the frame synchronization verification, the vehicle light controller may send an image frame pre-storage success signal of the corresponding frame to the cabin entertainment processing unit, so that the cabin entertainment processing unit can count the number of image frames cached by the vehicle light controller and trigger the cabin entertainment processing unit to send the next image frame to the vehicle light controller.

Step S103, sequentially obtaining the plurality of image frames from the cache pool and displaying the plurality of image frames on the lamp panel in response to that a playback event is triggered.

In an embodiment, if it is detected that the number of image frames cached in the cache pool reaches a preset number of cached frames, the playback event is triggered. When the playback event is triggered, the vehicle light controller starts playing the animation to be displayed on the lamp panel. During the playback of the animation to be displayed, the plurality of image frames are sequentially obtained from the cache pool and displayed on the lamp panel according to a preset animation refresh rate.

In the solution of the embodiment, the above steps S101 and S102 are the pre-storage process of the animation to be displayed, and the step S103 is the playback process of the animation to be displayed. It should be noted that the execution times of the pre-storage process and the playback processes may overlap. That is, after the playback event is triggered and the vehicle light controller starts playing the first image frame data, as long as there are still image frame data of the animation to be displayed not pre-stored in the cache pool, steps S101 and S102 can also be executed until all frame image frame data included in the animation to be displayed are successfully cached in the cache pool.

In the solution of the embodiment, by receiving a plurality of image frames of an animation to be displayed; performing frame synchronization verification on each of the image frames, and putting the image frame into a cache pool after the verification passes; and sequentially obtaining the plurality of image frames from the cache pool and displaying the plurality of image frames on the lamp panel in response to that a playback event is triggered. By performing frame synchronization verification on the received image frames, the present application avoids the animation display effect not meeting the user's actual needs due to image frame errors during image frame transmission. Meanwhile, by adopting the cache pool, during animation playback, the plurality of image frames are directly obtained from the cache pool for display without waiting for the completion of the transmission of the plurality of image frame data before displaying the plurality of image frame data, thereby reducing stuttering and improving the smoothness of the animation display on the vehicle lamp panel.

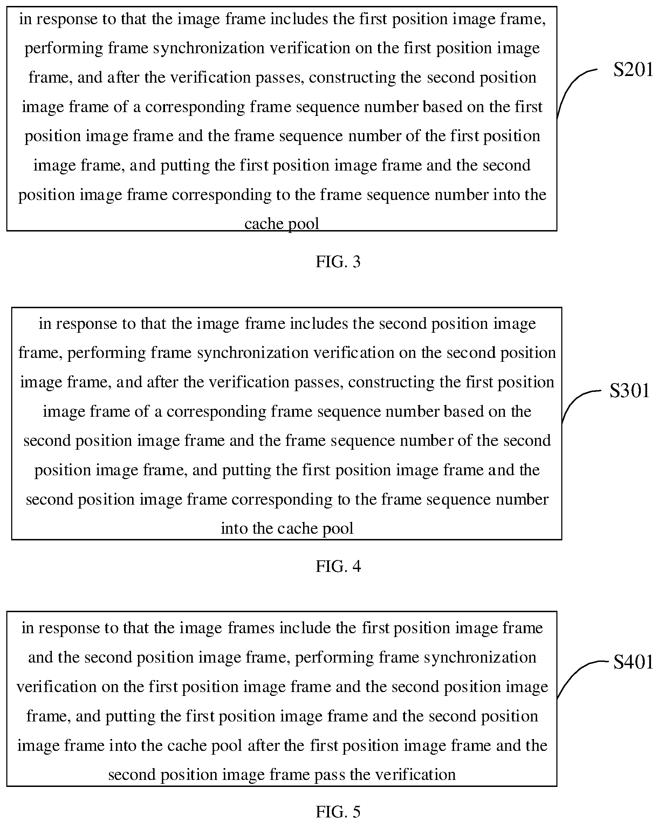

As shown in FIG. 3, FIG. 3 is a schematic flowchart of the method for displaying the animation on the vehicle lamp panel according to a second embodiment of the present application. Compared with the above embodiment, the image frame in the embodiment includes a first position image frame. The first position image frame is displayed in a first position area of the vehicle lamp panel (such as the area corresponding to the left lamp panel).

The performing frame synchronization verification on each of the image frames, and putting the image frame into a cache pool after the verification passes includes:
Step S201, in response to that the image frame includes the first position image frame, performing frame synchronization verification on the first position image frame, and after the verification passes, constructing the second position image frame of a corresponding frame sequence number based on the first position image frame and the frame sequence number of the first position image frame, and putting the first position image frame and the second position image frame corresponding to the frame sequence number into the cache pool.

Considering that some frame image data in the animation to be displayed may be data of the symmetric image type, in order to reduce the calculation amount during transmission, the cabin entertainment processing unit may frame the images belonging to the symmetric image type into a first position image frame (such as an image frame of the left lamp panel) and a second position image frame (such as an image frame of the right lamp panel) in a symmetric manner, and only transmit the first position image frame to the vehicle light controller. After receiving the first position image frame, the vehicle light controller performs frame synchronization verification on the first position image frame, and after the verification passes, constructs the second position image frame based on the first position image frame, where the second position image frame and the first position image frame satisfy an image symmetry relationship. Then, the vehicle light controller combines and caches the frame sequence number, the first position image frame and the second position image frame corresponding to the frame sequence number into the cache pool.

In the embodiment, through the above solution, when the image frame includes a first position image frame, frame synchronization verification is performed on the first position image frame, and after the verification passes, a second position image frame of the corresponding frame sequence number is constructed based on the first position image frame and the frame sequence number of the first position image frame, and the first position image frame and the second position image frame corresponding to the frame sequence number are put into the cache pool. By considering the scenario where there are image frame data of symmetric image types, the transmitted image frame data only includes the first position image frame, which reduces the data calculation amount. By reusing the first position image frame to construct complete image frame data, the data amount is reduced while the integrity of animation display is ensured.

As shown in FIG. 4, FIG. 4 is a schematic flowchart of the method for displaying the animation on the vehicle lamp panel according to a third embodiment of the present application. Compared with the above embodiment, the image frame in the embodiment includes a second position image frame. The second position image frame is displayed in a second position area of the vehicle lamp panel (such as the area corresponding to the right lamp panel). Correspondingly, the performing frame synchronization verification on each of image frames, and putting the image frame into a cache pool after the verification passes includes:

Step S301, in response to that the image frame includes the second position image frame, performing frame synchronization verification on the second position image frame, and after the verification passes, constructing the first position image frame of a corresponding frame sequence number based on the second position image frame and the frame sequence number of the second position image frame, and putting the first position image frame and the second position image frame corresponding to the frame sequence number into the cache pool.

The specific implementation principle and effect of step S301 are the same as those of the above step S201, and will not be repeated here.

As shown in FIG. 5, FIG. 5 is a schematic flowchart of the method for displaying the animation on the vehicle lamp panel according to a fourth embodiment of the present application. Compared with the above embodiment, the image frames in the embodiment include a first position image frame and a second position image frame. The first position image frame is displayed in a first position area of the vehicle lamp panel (such as the area corresponding to the left lamp panel), and the second position image frame is displayed in a second position area of the vehicle lamp panel (such as the area corresponding to the left lamp panel). The performing frame synchronization verification on each of image frames, and putting the image frame into the cache pool after the verification passes includes:
Step S401, in response to that the image frames include the first position image frame and the second position image frame, performing frame synchronization verification on the first position image frame and the second position image frame, and putting the first position image frame and the second position image frame into the cache pool after the first position image frame and the second position image frame pass the verification.

In the solution of the embodiment, if the image frame data includes a first position image frame and a second position image frame, frame synchronization verification needs to be performed on the first position image frame and the second position image frame respectively. When the first position image frame and the second position image frame pass the verification, the frame sequence number, the first position image frame and the second position image frame corresponding to the frame sequence number are combined and put into the cache pool.

In the embodiment, through the above solution, when the image frames include a first position image frame and a second position image frame, frame synchronization verification is performed on the first position image frame and the second position image frame, and when the first position image frame and the second position image frame pass the verification, the first position image frame and the second position image frame are put into the cache pool, which realizes the verification of the image frame data during the transmission process and reduces the probability of image frame error.

Based on any of the above embodiments, the first position image frame includes a verification value of first position image frame and a complete image verification value; the second position image frame includes a verification value of second position image frame and the complete image verification value; the verification value of first position image frame is calculated based on the pixel information of the first position image frame; the verification value of second position image frame is calculated based on the pixel information of the second position image frame; the complete image verification value is calculated based on the pixel information of the first position image frame and the pixel information of the second position image frame.

The performing frame synchronization verification on the first position image frame and the second position image frame includes:
Step a, performing frame synchronization verification on the first position image frame based on the verification value of first position image frame and the complete image verification value.

In an embodiment, the cabin entertainment processing unit may calculate the verification value of first position image frame using an accumulative checksum algorithm based on the product of the total number of pixel points included in the first position image frame and the number of bits corresponding to the pixel points. For example, the first position image frame includes 114 pixel points, and the pixel depth (i.e., the number of bits) of each pixel point is 4 bytes. Then the product of the total number of pixel points included in the first position image frame and the number of bits corresponding to the pixel points = 114×4. The product result of 114×4 is converted into a binary number, and then bitwise accumulative calculation is performed on the converted binary number to obtain the verification value of first position image frame.

The calculation principles of the verification value of second position image frame and the complete image verification value are the same as those of the verification value of first position image frame, and will not be repeated here.

After determining the verification value of first position image frame, the verification value of second position image frame, and the complete image verification value, the cabin entertainment processing unit sends the first position image frame data to be transmitted, the verification value of first position image frame to be transmitted, and the complete image verification value to be transmitted to the vehicle light controller.

Correspondingly, the first position image frame received by the vehicle light controller as the receiving terminal includes the first position image frame data, the verification value of first position image frame, and the complete image verification value. Then, the corresponding verification method can be selected for verification and detection based on the verification method adopted by the cabin entertainment processing unit. For example, if the above-mentioned cabin entertainment processing unit uses an accumulative checksum algorithm to calculate the verification value, the vehicle light controller accumulates the first position image frame data, the verification value of first position image frame, and the complete image verification value, and then adds 1. If the result is 0, it indicates that the first position image frame data has no transmission error, and the frame synchronization verification of the first position image frame passes.

Step b, performing frame synchronization verification on the second position image frame based on the verification value of second position image frame and the complete image verification value.

The implementation principle of the frame synchronization verification of the second position image frame is the same as that of the above-mentioned first position image frame, and will not be repeated here.

In the solution of the embodiment, the first position image frame is verified based on the pixel information of the first position image frame, and the second position image frame is verified based on the pixel information of the second position image frame, which can perform verification in combination with the pixel information of actual image, thereby improving the accuracy of the verification and detection results of the image frame.

Based on any of the above embodiments, before the playback event is triggered, the method may further include:
in response to that a number of image frames cached in the cache pool reaches a preset number of cached frames, activating the playback event.

The number of cached frames can be determined according to actual conditions, for example, it can be set to 10 frames.

In an embodiment, after the vehicle light controller caches a plurality of image frames into the cache pool, the vehicle light controller may send an image frame pre-storage success signal of the corresponding frame to the cabin entertainment processing unit, so that the cabin entertainment processing unit can count the number of image frames cached by the vehicle light controller. When the cabin entertainment processing unit detects the number of image frames cached by the vehicle light controller, the cabin entertainment processing unit may send a playback instruction to the vehicle light controller, and the vehicle light controller activates the playback event after receiving the playback instruction.

In the solution of the embodiment, by activating the playback event when the number of image frames cached in the cache pool reaches the preset number of cached frames, when the animation starts to be played, there are enough image frame data in the cache pool that can be directly used for the display of the image data of the lamp panel without waiting for the transmission process of the image frame data. The display processing speed of the image frame data can keep up with the animation refresh rate, avoiding the stuttering phenomenon during the playback of the lamp panel animation.

Based on any of the above embodiments, the receiving the plurality of image frames of an animation to be displayed may include:
receiving the plurality of image frames transmitted by the cabin entertainment processing unit based on a preset transmission channel.

The above-mentioned transmission channel may be a CAN FD physical link established between the cabin entertainment processing unit and the vehicle light controller. CAN FD has the characteristics of high speed, and can still reach 2 m/s even when the image frame contains a large amount of data.

In addition, the embodiment of the present application also provides an apparatus for displaying an animation on a vehicle lamp panel, the apparatus for displaying the animation on the vehicle lamp panel includes a receiving module, a verification and caching module and a display module.

The receiving module is configured to receive a plurality of image frames of an animation to be displayed.

The verification and caching module is configured to perform frame synchronization verification on each of the image frames, and put the image frame into a cache pool after the verification passes.

The display module is configured to sequentially obtain the plurality of image frames from the cache pool and display the plurality of image frames on the lamp panel in response to that a playback event is triggered.

For the principle and implementation process of realizing the apparatus for displaying the animation on the vehicle lamp panel in the embodiment, reference may be made to the above embodiments, which will not be repeated here.

In addition, the embodiment of the present application also provides a vehicle, the vehicle includes a memory, a processor, and a program for displaying the animation on the vehicle lamp panel stored on the memory and executable on the processor. When the program for displaying the animation on the vehicle lamp panel is executed by the processor, the method for displaying the animation on the vehicle lamp panel as described above are implemented.

Since the program for displaying the animation on the vehicle lamp panel is executed by the processor and adopts all the technical solutions of the aforementioned embodiments, it at least has all the beneficial effects brought by all the technical solutions of the aforementioned embodiments, which will not be repeated one by one here.

In addition, the embodiment of the present application also provides a computer-readable storage medium, the computer-readable storage medium stores a program for displaying the animation on the vehicle lamp panel, and when the program for displaying the animation on the vehicle lamp panel is executed by a processor, the method for displaying the animation on the vehicle lamp panel as described above are implemented.

Since the program for displaying the animation on the vehicle lamp panel is executed by the processor and adopts all the technical solutions of the aforementioned embodiments, it at least has all the beneficial effects brought by all the technical solutions of the aforementioned embodiments, which will not be repeated here.

Compared with the related art, a method and an apparatus for displaying an animation on a vehicle lamp panel, a vehicle and a storage medium provided in the embodiments of the present application, by receiving a plurality of image frames of an animation to be displayed; performing frame synchronization verification on each of the image frames, and putting the image frame into a cache pool after the verification passes; and sequentially obtaining the plurality of image frames from the cache pool and displaying the plurality of image frames on the lamp panel in response to that a playback event is triggered. By performing frame synchronization verification on the received image frames, the present application avoids the animation display effect not meeting the user's actual needs due to image frame errors during image frame transmission. Meanwhile, by adopting the cache pool, during animation playback, the plurality of image frames are directly obtained from the cache pool for display without waiting for the completion of the transmission of the plurality of image frame data before displaying the plurality of image frame data, thereby reducing stuttering and improving the smoothness of the animation display on the vehicle lamp panel.

It should be noted that in the present application, the terms "include", "comprise" or any other variant thereof are intended to cover non-exclusive inclusion, so that a process, method, article or system including a series of elements not only includes those elements but also includes other elements not explicitly listed, or also includes elements inherent to such process, method, article or system. Without more restrictions, an element defined by the sentence "including a..." does not exclude the existence of other identical elements in the process, method, article or system including the element.

The sequence numbers of the embodiments of the present application are only for description, and do not represent the advantages or disadvantages of the embodiments.

Through the description of the above implementation modes, those skilled in the art can clearly understand that the methods of the above embodiments can be implemented by means of software plus a necessary general hardware platform, and of course, can also be implemented by hardware, but in many cases, the former is a better implementation mode. Based on this understanding, the technical solution of the present application essentially or the part that contributes to the related art can be embodied in the form of a software product. The computer software product is stored in a storage medium (such as ROM/RAM, magnetic disk, optical disk) as described above, and includes several instructions to make a terminal device (which can be a mobile phone, a computer, a server, a controlled terminal, a network device, etc.) execute the methods of each embodiment of the present application.

The above are only the exemplary embodiments of the present application, and are not intended to limit the patent scope of the present application. Any equivalent structure or equivalent process transformation made by using the contents of the specification and drawings of the present application, or directly or indirectly applied in other related technical fields, shall similarly be included in the patent protection scope of the present application.

## Claims

1. A method for displaying an animation on a vehicle lamp panel, **characterized by** comprising:
receiving a plurality of image frames of an animation to be displayed;
performing frame synchronization verification on each of the image frames, and putting the image frame into a cache pool after the verification passes; and
sequentially obtaining the plurality of image frames from the cache pool and displaying the plurality of image frames on the lamp panel in response to that a playback event is triggered.

2. The method for displaying the animation on the vehicle lamp panel according to claim 1, wherein the image frame comprises a first position image frame or a second position image frame; the performing frame synchronization verification on each of the image frames and putting the image frame into the cache pool after the verification passes comprises:
in response to that the image frame comprises the first position image frame, performing frame synchronization verification on the first position image frame, and after the verification passes, constructing the second position image frame of a corresponding frame sequence number based on the first position image frame and the frame sequence number of the first position image frame, and putting the first position image frame and the second position image frame corresponding to the frame sequence number into the cache pool; or
in response to that the image frame comprises the second position image frame, performing frame synchronization verification on the second position image frame, and after the verification passes, constructing the first position image frame of a corresponding frame sequence number based on the second position image frame and the frame sequence number of the second position image frame, and putting the first position image frame and the second position image frame corresponding to the frame sequence number into the cache pool.

3. The method for displaying the animation on the vehicle lamp panel according to claim 1, wherein the image frames comprise a first position image frame and a second position image frame; the performing frame synchronization verification on each of the image frames and putting the image frame into the cache pool after the verification passes comprises:
in response to that the image frames comprise the first position image frame and the second position image frame, performing frame synchronization verification on the first position image frame and the second position image frame, and putting the first position image frame and the second position image frame into the cache pool after the first position image frame and the second position image frame pass the verification.

4. The method for displaying the animation on the vehicle lamp panel according to claim 3, wherein the first position image frame comprises a verification value of first position image frame and a complete image verification value; the second position image frame comprises a verification value of second position image frame and the complete image verification value; the verification value of first position image frame is calculated based on pixel information of the first position image frame; the verification value of second position image frame is calculated based on pixel information of the second position image frame; the complete image verification value is calculated based on the pixel information of the first position image frame and the pixel information of the second position image frame;
the performing frame synchronization verification on the first position image frame and the second position image frame comprises:
performing frame synchronization verification on the first position image frame based on the verification value of first position image frame and the complete image verification value; and
performing frame synchronization verification on the second position image frame based on the verification value of second position image frame and the complete image verification value.

5. The method for displaying the animation on the vehicle lamp panel according to claim 1, wherein before the playback event is triggered, the method further comprises:
in response to that a number of image frames cached in the cache pool reaches a preset number of cached frames, activating the playback event.

6. The method for displaying the animation on the vehicle lamp panel according to any one of claims 1 to 5, wherein the vehicle comprises a cabin entertainment processing unit, and the receiving the plurality of image frames of the animation to be displayed comprises:
receiving the plurality of image frames transmitted by the cabin entertainment processing unit based on a preset transmission channel.

7. The method for displaying the animation on the vehicle lamp panel according to any one of claims 1 to 5, wherein grayscale information of each pixel point in the image frame is represented in binary.

8. An apparatus for displaying an animation on a vehicle lamp panel, **characterized by** comprising:
a receiving module, configured to receive a plurality of image frames of an animation to be displayed;
a verification and caching module, configured to perform frame synchronization verification on each of the image frames, and put the image frame into a cache pool after the verification passes; and
a display module, configured to sequentially obtain the plurality of image frames from the cache pool and display the plurality of image frames on the lamp panel in response to that a playback event is triggered.

9. A computer-readable storage medium, wherein the computer-readable storage medium stores a program for displaying an animation on a vehicle lamp panel, and when the program for displaying the animation on the vehicle lamp panel is executed by a processor, the method for displaying the animation on the vehicle lamp panel according to any one of claims 1 to 7 is implemented.

10. A vehicle, **characterized by** comprising:
a memory;
a processor; and
a program for displaying an animation on a vehicle lamp panel stored on the memory and executable on the processor,
wherein when the program for displaying the animation on the vehicle lamp panel in the memory is executed by the processor, the following steps are implemented:
receiving a plurality of image frames of an animation to be displayed;
performing frame synchronization verification on each of the image frames, and putting the image frame into a cache pool after the verification passes; and
sequentially obtaining the plurality of image frames from the cache pool and displaying the plurality of image frames on the lamp panel in response to that a playback event is triggered.

11. The vehicle according to claim 10, wherein when the program for displaying the animation on the vehicle lamp panel in the memory is executed by the processor, the following steps are further implemented:
in response to that the image frame comprises a first position image frame, performing frame synchronization verification on the first position image frame, and after the verification passes, constructing a second position image frame of a corresponding frame sequence number based on the first position image frame and the frame sequence number of the first position image frame, and putting the first position image frame and the second position image frame corresponding to the frame sequence number into the cache pool.

12. The vehicle according to claim 10, wherein when the program for displaying the animation on the vehicle lamp panel in the memory is executed by the processor, the following steps are further implemented:
in response to that the image frame comprises a second position image frame, performing frame synchronization verification on the second position image frame, and after the verification passes, constructing a first position image frame of a corresponding frame sequence number based on the second position image frame and the frame sequence number of the second position image frame, and putting the first position image frame and the second position image frame corresponding to the frame sequence number into the cache pool.

13. The vehicle according to claim 10, wherein when the program for displaying the animation on the vehicle lamp panel in the memory is executed by the processor, the following steps are further implemented:
in response to that the image frames comprise a first position image frame and a second position image frame, performing frame synchronization verification on the first position image frame and the second position image frame, and putting the first position image frame and the second position image frame into the cache pool after the first position image frame and the second position image frame pass the verification.

14. The vehicle according to claim 10, wherein when the program for displaying the animation on the vehicle lamp panel in the memory is executed by the processor, the following steps are further implemented:
performing frame synchronization verification on the first position image frame based on the verification value of first position image frame and the complete image verification value; and
performing frame synchronization verification on the second position image frame based on the verification value of second position image frame and the complete image verification value.

15. The vehicle according to claim 10, wherein when the program for displaying the animation on the vehicle lamp panel in the memory is executed by the processor, the following steps are further implemented:
in response to that a number of image frames cached in the cache pool reaches a preset number of cached frames, activating the playback event.

16. The vehicle according to claim 10, wherein when the program for displaying the animation on the vehicle lamp panel in the memory is executed by the processor, the following steps are further implemented:
receiving the plurality of image frames transmitted by the cabin entertainment processing unit based on a preset transmission channel.
